# EUROPÄISCHE PATENTANMELDUNG

(11) **EP 4 191 837 A1**
(43) Veröffentlichungstag der Anmeldung: **07.06.2023**
(21) Anmeldenummer: 22204364.8
(22) Anmeldetag: 28.10.2022
(51) Int. Cl.: H02K 1/32, H02K 3/52, H02K 11/00, H02K 11/042, H02K 19/12, H01F 38/18

(54) **KOMPAKTER ROTOR FÜR EINE ELEKTRISCHE MASCHINE MIT INDUKTIVEM ÜBERTRAGER SOWIE ELEKTRISCHE MASCHINE UND FAHRZEUG DAZU**

(30) Priorität: 02.12.2021 DE 102021213736
(71) Anmelder: Valeo eAutomotive Germany GmbH, 91056 Erlangen (DE)
(72) Erfinder: Bach, Regina, 97616 Bad Neustadt a.d.Saale (DE); Wolf, Nico, 97616 Bad Neustadt a.d.Saale (DE); Wieczorek, Christoph, 97616 Bad Neustadt a.d.Saale (DE); Schlereth, Alexander, 97616 Bad Neustadt a.d.Saale (DE); Siepker, Carsten, 97616 Bad Neustadt a.d.Saale (DE)
(74) Vertreter: Valeo Powertrain Systems

(57) **Zusammenfassung**

Es wird ein Rotor (2) für eine elektrische Maschine (1) angegeben, welcher eine Rotorwelle (3) mit einem Rotorblechpaket (4) aufweist, sowie eine Rotorwicklung mit einem stirnseitigen Rotorwicklungskopf (7) und eine Rotorkopfabdeckung (20a, 20b), welche einen ersten topfförmigen Abschnitt (B) aufweist, in welchem der Rotorwicklungskopf (7) angeordnet ist. Weiterhin weist die Rotorkopfabdeckung (20a, 20b) einen zweiten topförmigen Abschnitt (C) auf, wobei der zweite topfförmige Abschnitt (C) gegengleich zum ersten topfförmigen Abschnitt (B) orientiert ist, und der erste topfförmige Abschnitt (B) und der zweite topförmige Abschnitt (C) einen gemeinsamen Bodenabschnitt ausbilden. Weiterhin umfasst der Rotor (2) eine sekundäre Übertragungsspule (21), welche in dem zweiten topfförmigen Abschnitt (C) angeordnet ist. Zudem werden eine elektrische Maschine (1) mit einem solchen Rotor (2) und ein Fahrzeug (36) mit einer solchen elektrischen Maschine (1) angegeben.

## Beschreibung

### TECHNISCHES GEBIET

Die Erfindung betrifft einen Rotor für eine elektrische Maschine, welcher eine Rotorwelle umfasst, ein auf der Rotorwelle montiertes Rotorblechpaket, eine an dem Rotorblechpaket angeordnete Rotorwicklung mit einem stirnseitigen ersten Rotorwicklungskopf sowie eine Rotorkopfabdeckung mit einem ersten topfförmigen Abschnitt, in welchem der erste Rotorwicklungskopf angeordnet ist. Weiterhin betrifft die Erfindung eine elektrische Maschine mit einem solchen Rotor und ein Fahrzeug mit einer solchen elektrischen Maschine.

### STAND DER TECHNIK

Bei fremderregten Synchronmaschinen erfolgt die Magnetisierung des Rotors durch einen Stromfluss durch eine Rotor(erreger)wicklung. Dazu ist es nötig, eine Stromquelle mit der drehbaren Rotorwicklung zu verbinden oder zu koppeln. Dies erfolgt beispielsweise durch einen induktiven Übertrager, welcher eine feste, primäre Übertragungsspule sowie eine mit dem Rotor mitrotierende, sekundäre Übertragungsspule aufweist. Mit Hilfe des induktiven Übertragers kann der für die Erregung der Synchronmaschine nötige Strom kontaktlos von der Stromquelle auf die Rotorwicklung übertragen werden. Der induktive Übertrager ist nach dem Stand der Technik als eigenständiges Bauteil ausgebildet, das im Bereich der elektrischen Maschine, jedoch außerhalb davon angeordnet ist. Dadurch wird zwar ein modularer Aufbau des Systems verwirklicht, jedoch stößt die bekannte Bauform bei beschränktem Bauraum, so wie er häufig im Fahrzeugbau anzutreffen ist, an ihre Grenzen. Mit anderen Worten ist insbesondere der Einbau einer elektrischen Maschine mit induktivem Übertrager in ein Elektrofahrzeug mit technischen Problemen verbunden.

### OFFENBARUNG DER ERFINDUNG

Eine Aufgabe der Erfindung ist es daher, einen verbesserten elektrischen Rotor einer elektrischen Maschine, eine verbesserte elektrische Maschine sowie ein verbessertes Fahrzeug anzugeben. Insbesondere soll eine kompakte Bauform einer fremderregten Synchronmaschine mit induktivem Übertrager angegeben werden.

Die Aufgabe der Erfindung wird mit einem Rotor der eingangs genannten Art gelöst, bei welchem die Rotorkopfabdeckung einen zweiten topförmigen Abschnitt aufweist, wobei
- der zweite topfförmige Abschnitt gegengleich zum ersten topfförmigen Abschnitt orientiert ist,
- der erste topfförmige Abschnitt und der zweite topförmige Abschnitt einen gemeinsamen Bodenabschnitt ausbilden und
- der Rotor eine sekundäre Übertragungsspule aufweist, welche in dem zweiten topfförmigen Abschnitt angeordnet ist.

Die Rotorkopfabdeckung ist somit insbesondere ringförmig ausgebildet, wobei der Ring einen T-förmigen Querschnitt aufweisen kann. Die beiden topförmigen Abschnitte können aber auch unterschiedlich groß ausgebildet sein.

Darüber hinaus wird die Aufgabe der Erfindung mit einer elektrischen Maschine gelöst, welche einen Stator umfasst, in dem ein Rotor der oben genannten Art angeordnet ist. Insbesondere weist die elektrische Maschine auch eine fest mit dem Stator verbundene primäre Übertragungsspule auf, welche benachbart zu der sekundären Übertragungsspule angeordnet ist. Die fixe primäre Übertragungsspule und die rotorseitige sekundäre Übertragungsspule sind dabei insbesondere koaxial zueinander angeordnet. Dazu kann die primäre Übertragungsspule an einem Gehäuse oder Lagerschild der elektrischen Maschine befestigt sein.

Schließlich wird die Aufgabe auch durch ein Fahrzeug gelöst, welches eine elektrische Maschine der genannten Art zum Antreiben des Fahrzeugs aufweist.

Durch die vorgeschlagenen Maßnahmen kann eine kompakte Bauform einer elektrischen Maschine (insbesondere einer fremderregten Synchronmaschine) mit induktivem Übertrager erreicht werden. Somit wird insbesondere der Einbau einer solchen elektrischen Maschine in ein Elektrofahrzeug, in dem Bauraum nur sehr begrenzt verfügbar ist, erleichtert.

Insbesondere kann die Rotorkopfabdeckung aus Aluminium gefertigt sein beziehungsweise Aluminium aufweisen. Auf diese Weise hat die Rotorkopfabdeckung nur geringen Einfluss auf die in der Rotorwicklung und im induktiven Übertrager hervorgerufenen Magnetfelder und kann beispielsweise im Druckgussverfahren rationell hergestellt werden. Optional kann die Rotorkopfabdeckung einen Kunststoffüberzug aufweisen. In einer besonderen Ausführungsvariante weist die Rotorkopfabdeckung einen aus Aluminium gefertigten Grundkörper mit einem außen umlaufenden Ring aus Edelstahl auf. Dadurch kann die Stabilität der Rotorkopfabdeckung erhöht werden, ohne dass es zu einer maßgeblichen Beeinflussung der in der Rotorwicklung und im induktiven Übertrager hervorgerufenen Magnetfelder kommt.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn in dem zweiten topfförmigen Abschnitt ein Gleichrichter angeordnet ist, welcher eingangsseitig mit der sekundären Übertragungsspule und ausgangsseitig mit der Rotorwicklung elektrisch verbunden ist. Auf diese Weise kann die Umwandlung der vom induktiven Übertrager stammenden Wechselspannung in eine für die Rotor(erreger)wicklung nötige Gleichspannung bei kompakter Bauform der elektrischen Maschine realisiert werden.

Günstig ist es, wenn der erste Rotorwicklungskopf in dem ersten topfförmigen Abschnitt mit einer Vergussmasse vergossen ist. Weiterhin ist es günstig, wenn die sekundäre Übertragungsspule (und gegebenenfalls der Gleichrichter) in dem zweiten topfförmigen Abschnitt mit einer Vergussmasse vergossen ist. Dadurch kann die mechanische Stabilität des ersten Rotorwicklungskopfs beziehungsweise der sekundären Übertragungsspule mit einem einzigen Bauteil erhöht werden. Zudem können so der erste Rotorwicklungskopf beziehungsweise die sekundäre Übertragungsspule und gegebenenfalls der Gleichrichter gut gegen Vibrationen und Umwelteinflüsse geschützt werden.

Besonders vorteilhaft ist es, wenn die Rotorkopfabdeckung einen Kühlkanal (oder auch mehrere solche Kühlkanäle) aufweist. Dadurch kann nicht nur die Rotorkopfabdeckung gekühlt werden, sondern auch der erste Rotorwicklungskopf beziehungsweise die sekundäre Übertragungsspule und gegebenenfalls der Gleichrichter. Da sich die primäre Übertragungsspule in unmittelbarer Nähe zur sekundären Übertragungsspule befindet, profitiert auch diese von der verbesserten Kühlung.

Insbesondere ist es dabei von Vorteil, wenn der Kühlkanal der Rotorkopfabdeckung von einem in der Rotorwelle verlaufenden Rotorwellenkühlkanal ausgeht. Dadurch kann der Rotorkopfabdeckung über den Rotorwellenkühlkanal ein Kühlmedium zugeführt und die Kühlwirkung verbessert werden.

Besonders vorteilhaft ist es dabei, wenn der Kühlkanal durch den Bodenabschnitt der Rotorkopfabdeckung radial nach außen verläuft. Auf diese Weise wird der Kühlmittelfluss durch die bei Rotation des Rotors entstehende Zentrifugalkraft besonders gut unterstützt.

### KURZE BESCHREIBUNG DER FIGUREN

Ausführungsbeispiele der Erfindung sind exemplarisch in den beigefügten schematischen Figuren dargestellt. Es zeigen:
- Fig. 1: eine schematisch im Halbschnitt dargestellte, beispielhafte elektrische Maschine mit einem Rotor gemäß der Erfindung und
- Fig. 2: eine Vorderansicht des Rotors;
- Fig. 3: eine alternative Ausführungsform einer Rotorkopfabdeckung und
- Fig. 4: eine elektrische Maschine der vorgeschlagenen Art, welche in ein Fahrzeug eingebaut ist.

### DETAILIERTE BESCHREIBUNG DER ERFINDUNG

Einführend wird festgehalten, dass gleiche Teile in den unterschiedlich Ausführungsformen mit gleichen Bezugszeichen beziehungsweise gleichen Bauteilbezeichnungen versehen werden, gegebenenfalls mit unterschiedlichen Indizes. Die in der Beschreibung enthaltene Offenbarung eines Bauteils kann sinngemäß auf ein anderes Bauteil mit gleichem Bezugszeichen beziehungsweise gleicher Bauteilbezeichnung übertragen werden. Auch sind die in der Beschreibung gewählten Lageangaben, wie zum Beispiel "oben", "unten", "hinten", "vorne", "seitlich" und so weiter auf die unmittelbar beschriebene sowie dargestellte Figur bezogen und bei einer Lageänderung sinngemäß auf die neue Lage zu übertragen.

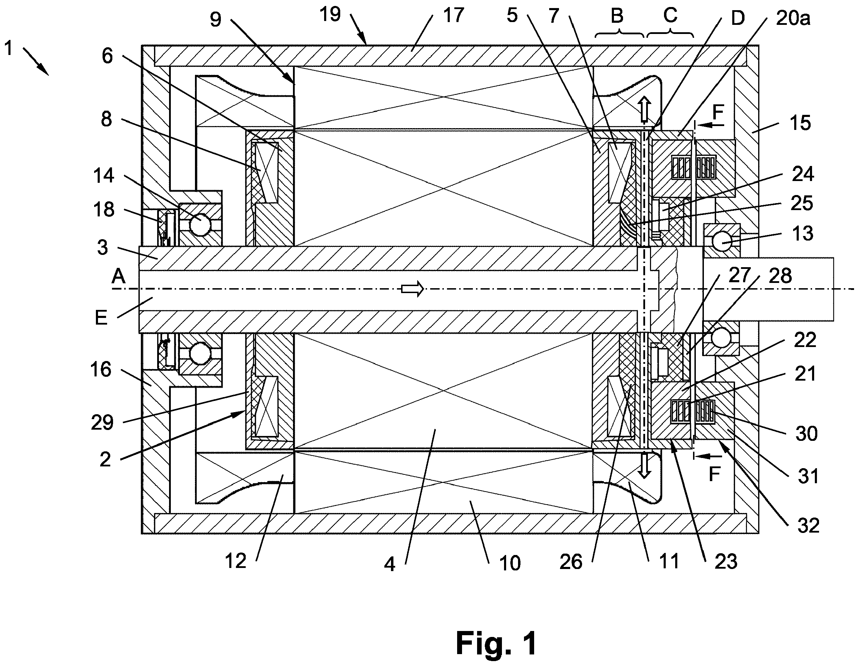

Fig. 1 zeigt einen Halbschnitt durch eine schematisch dargestellte elektrische Maschine 1. Die elektrische Maschine 1 umfasst einen Rotor 2 mit einer Rotorwelle 3 und einem auf der Rotorwelle 3 sitzenden Rotorblechpaket 4 mit mehreren aufeinander gestapelten Rotorblechen, die in der Fig. 1 jedoch nicht im Detail dargestellt sind. Darüber hinaus umfasst der Rotor 2 eine erste Endplatte 5, welche an einer Axialseite des Rotorblechpakets 4 angeordnet ist, und eine zweite Endplatte 6, welche an einer gegenüberliegenden Axialseite des Rotorblechpakets 4 angeordnet ist. Die erste Endplatte 5 und die zweite Endplatte 6 dienen der axialen Sicherung des Rotorblechpakets 4, sodass dieses im Betrieb der elektrischen Maschine 1 nicht auseinander wandern kann. Außerdem dienen die Endplatten 5, 6 als Grundkörper für Rotorwicklungen. Sowohl das Rotorblechpaket 4 als auch die erste Endplatte 5 und die zweite Endplatte 6 können zum Beispiel mit Hilfe einer Presspassung auf der Rotorwelle 3 montiert sein. Die erste Endplatte 5 und die zweite Endplatte 6 und somit auch das Rotorblechpaket 4 können aber auch mit Wellenschultern, Wellenmuttern oder dergleichen axial gesichert werden. Am Rotorblechpaket 4 ist zudem eine Rotor(erreger)wicklung angeordnet, von der in der Fig. 1 jedoch lediglich der erste Rotorwicklungskopf 7 und der zweite Rotorwicklungskopf 8 dargestellt sind.

Die elektrische Maschine 1 umfasst weiterhin einen Stator 9 mit einem Statorblechpaket 10 mit mehreren Statorblechen, die nicht im Einzelnen dargestellt sind, sowie in diesen angeordnete Statorwicklungen, von denen in der Fig. 1 wiederum nur der erste Statorwicklungskopf 11 und der zweite Statorwicklungskopf 12 dargestellt sind.

Der Rotor 2 beziehungsweise die Rotorwelle 3 ist mit Hilfe von (Wälz)lagern 13, 14 um eine Drehachse A gegenüber dem Stator 9 drehbar gelagert. Konkret sitzt das erste Lager 13 in einem ersten Lagerschild 15 und das zweite Lager 14 sitzt in einem zweiten Lagerschild 16. Weiterhin umfasst die elektrische Maschine 1 ein (mittleres) Gehäuseteil 17, welches das erste Lagerschild 15 und das zweite Lagerschild 16 verbindet und den Stator 9 aufnimmt. Im zweiten Lagerschild 16 ist zudem ein Wellendichtring 18 angeordnet. Optional kann so ein Wellendichtring auch im ersten Lagerschild 15 angeordnet sein. Das erste Lagerschild 15, das zweite Lagerschild 16 und das Gehäuseteil 17 bilden das Gehäuse 19 der elektrischen Maschine 1.

Der Rotor 2 umfasst außerdem eine Rotorkopfabdeckung 20a, welche einen ersten topfförmigen Abschnitt B aufweist, in welchem der erste Rotorwicklungskopf 7 angeordnet ist. Die Rotorkopfabdeckung 20a umfasst zudem einen zweiten topförmigen Abschnitt C. Der erste topfförmige Abschnitt B und der zweite topförmige Abschnitt C bilden einen gemeinsamen Bodenabschnitt aus, und der zweite topfförmige Abschnitt C ist gegengleich zum ersten topfförmigen Abschnitt B orientiert. Beispielsweise kann die Rotorkopfabdeckung 20a aus Aluminium gefertigt sein oder Aluminium aufweisen.

Der Rotor 2 umfasst zudem eine sekundäre Übertragungsspule 21, welche in einem ringförmigen Grundkörper 22 angeordnet ist und gemeinsam mit diesem den Sekundärteil 23 des induktiven Übertrages bildet. Der Sekundärteil 23 und damit die sekundäre Übertragungsspule 21 sind im zweiten topfförmigen Abschnitt C der Rotorkopfabdeckung 20a angeordnet.

Die Rotorkopfabdeckung 20a ist in diesem Beispiel ringförmig, wobei der Ring einen T-förmigen Querschnitt aufweist. Die Rotorkopfabdeckung 20a könnte aber auch anders ausgestaltet sein. Insbesondere könnten die beiden topförmigen Abschnitte B, C unterschiedlich groß sein.

Der Rotor 2 weist auch einen Gleichrichter 24 auf, welcher im zweiten topfförmigen Abschnitt C der Rotorkopfabdeckung 20a angeordnet ist und eingangsseitig mit Hilfe von Kabeln 25 mit der sekundären Übertragungsspule 21 und ausgangsseitig mit der Rotorwicklung elektrisch verbunden ist. Anstelle der Kabel 25 können auch andere elektrische Verbindungen verwendet werden, zum Beispiel soganannte "Busbars". Mit Hilfe des Gleichrichters 24 kann die von der sekundären Übertragungsspule 21 gelieferte Wechselspannung in eine für die Rotorwicklung nötige Gleichspannung umgewandelt werden.

Vorzugsweise ist der erste Rotorwicklungskopf 7 in dem ersten topfförmigen Abschnitt B der Rotorkopfabdeckung 20a mit einer Vergussmasse 26 vergossen, so wie das in dem in der Fig. 1 gezeigten Beispiel der Fall ist.

Vorzugsweise ist auch die sekundäre Übertragungsspule 21 (beziehungsweise der Grundköper 22) sowie der Gleichrichter 24 in dem zweiten topfförmigen Abschnitt C der Rotorkopfabdeckung 20a mit einer Vergussmasse 27 vergossen. Dadurch können der erste Rotorwicklungskopf 7 beziehungsweise die sekundäre Übertragungsspule 21 sowie der Gleichrichter 24 gut gegen Vibrationen und äußere Umwelteinflüsse geschützt werden. Im zweiten topfförmigen Abschnitt C der Rotorkopfabdeckung 20a ist die Vergussmasse 27 darüber hinaus mit einer Scheibe 28 abgedeckt.

In diesem Beispiel ist auch der zweite Rotorwicklungskopf 8 mit einer Abdeckung 29 abgedeckt. Eine Vergussmasse ist dort in der Fig. 1 nicht dargestellt, könnte aber vorgesehen sein.

Gegenüber der sekundäre Übertragungsspule 21 und benachbart zu dieser umfasst die elektrische Maschine 1 eine fest mit dem Stator 9 verbundene primäre Übertragungsspule 30. Diese ist gegenüber dem Stator 9 drehstarr in einem Grundkörper 31 angeordnet, welcher an dem ersten Lagerschild 15 befestigt ist. Die primäre Übertragungsspule 30 bildet gemeinsam mit dem Grundkörper 31 den Primärteil 32 des induktiven Übertragers. Die statorseitige primäre Übertragungsspule 30 und die rotorseitige sekundäre Übertragungsspule 21 sind koaxial zueinander angeordnet.

Vorteilhaft ist es, wenn die Rotorkopfabdeckung 20a einen optionalen Kühlkanal D oder mehrere solche optionalen Kühlkanäle D aufweist, so wie das in Fig. 1 der Fall ist. Dadurch können die Rotorkopfabdeckung 20a, der erste Rotorwicklungskopf 7, die sekundäre Übertragungsspule 21 sowie der Gleichrichter 24 gekühlt werden. Insbesondere ist es dabei von Vorteil, wenn, wie hier dargestellt, die Kühlkanäle D von einem in der Rotorwelle 3 verlaufenden Rotorwellenkühlkanal E ausgehen. Dadurch kann der Rotorkopfabdeckung 20a über den Rotorwellenkühlkanal E ein Kühlmedium, beispielsweise ein Öl, zugeführt und die Kühlwirkung verbessert werden. Weiterhin ist es von Vorteil, wenn der Kühlkanal D durch den Bodenabschnitt der Rotorkopfabdeckung 20a radial nach außen verläuft, so wie das in der Fig. 1 der Fall ist. Auf diese Weise wird der Kühlmittelfluss durch die bei Rotation des Rotors 2 entstehende Zentrifugalkraft unterstützt. Die Flussrichtung des Kühlmediums ist in der Fig. 1 mit Pfeilen angegeben.

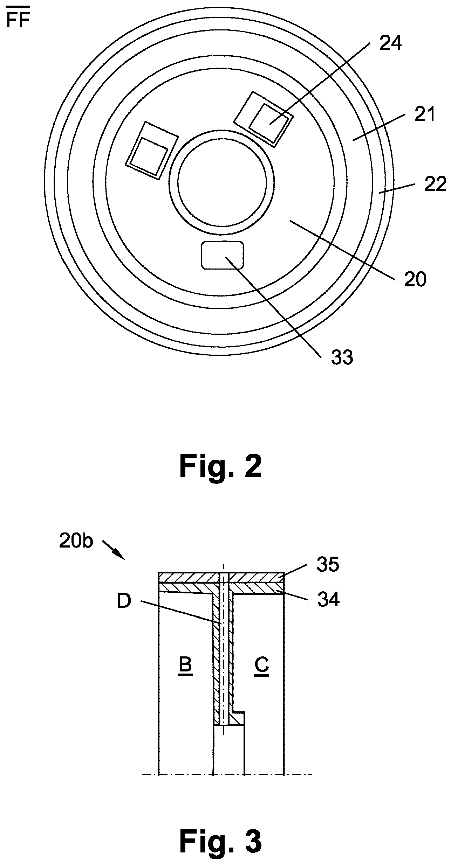

Fig. 2 zeigt nun ergänzend eine axiale Ansicht FF des Rotors 2. Um den Blick in das Innere des zweiten topfförmigen Abschnitts C der Rotorkopfabdeckung 20a zu ermöglichen, sind die Vergussmasse 26, die Scheibe 28 und die Kabel 25 in Fig. 2 weggelassen. Gut erkennbar sind der Gleichrichter 24 sowie eine Öffnung 33, welche als Kabeldurchführung für die Kabel 25 fungiert.

Fig. 3 zeigt eine alternative Ausführungsform für eine Rotorkopfabdeckung 20b in einer geschnittenen Ansicht. Die Rotorkopfabdeckung 20b weist einen aus Aluminium gefertigten Grundkörper 34 mit einem außen umlaufenden Ring 35 aus Edelstahl auf. Dadurch kann die Stabilität der Rotorkopfabdeckung 20b erhöht werden, ohne dass es zu einer maßgeblichen Beeinflussung der in der Rotorwicklung und im induktiven Übertrager hervorgerufenen Magnetfelder kommt.

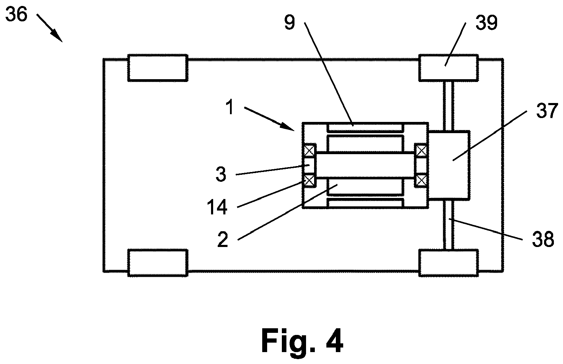

Die Fig. 4 zeigt schließlich die in ein Fahrzeug 36 eingebaute elektrische Maschine 1. Das Fahrzeug 36 weist zwei Achsen auf, von denen eine angetrieben ist. Konkret ist die elektrische Maschine 1 über ein optionales Getriebe 37 mit den Halbachsen 38 der Hinterachse verbunden. An den Halbachsen 38 sind schließlich die angetriebenen Räder 39 montiert. Die elektrische Maschine 1, das Getriebe 37 und die Halbachsen 38 sind Teil des Antriebsstrangs des Fahrzeugs 36. Der Antrieb des Fahrzeugs 36 erfolgt zumindest teilweise oder zeitweise durch die elektrische Maschine 1. Das heißt, die elektrische Maschine 1 kann zum alleinigen Antrieb des Fahrzeugs 36 dienen oder zum Beispiel im Verbund mit einer Verbrennungskraftmaschine vorgesehen sein (Hybridantrieb).

Abschließend wird festgehalten, dass der Schutzbereich durch die Patentansprüche bestimmt ist. Die Beschreibung und die Zeichnungen sind jedoch zur Auslegung der Ansprüche heranzuziehen. Die in den Figuren enthaltenen Merkmale können beliebig ausgetauscht und miteinander kombiniert werden. Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenliste

- 1: elektrische Maschine
- 2: Rotor
- 3: Rotorwelle
- 4: Rotorblechpaket
- 5: erste Endplatte

- 6: zweite Endplatte
- 7: erster Rotorwicklungskopf
- 8: zweiter Rotorwicklungskopf
- 9: Stator
- 10: Statorblechpaket

- 11: erster Statorwicklungskopf
- 12: zweiter Statorwicklungskopf
- 13: (Wälz)lager
- 14: (Wälz)lager
- 15: erstes Lagerschild

- 16: zweites Lagerschild
- 17: (mittleres) Gehäuseteil
- 18: Wellendichtring
- 19: Gehäuse der elektrische Maschine
- 20a, 20b: Rotorkopfabdeckung

- 21: sekundäre Übertragungsspule
- 22: ringförmiger Grundkörper für sekundäre Übertragungsspule
- 23: Sekundärteil
- 24: Gleichrichter
- 25: Kabel
- 26: Vergussmasse
- 27: Vergussmasse
- 28: Scheibe
- 29: Abdeckung
- 30: primäre Übertragungsspule

- 31: Grundkörper für primäre Übertragungsspule
- 32: Primärteil
- 33: Öffnung (Kabeldurchführung)
- 34: Grundkörper
- 35: Edelstahlring

- 36: Fahrzeug
- 37: Getriebe
- 38: Halbachse
- 39: Rad

- A: Drehachse
- B: erster topfförmiger Abschnitt
- C: zweiter topförmiger Abschnitt
- D: Kühlkanal in Rotorkopfabdeckung
- E: Rotorwellenkühlkanal

## Patentansprüche

1. Rotor (2) für eine elektrische Maschine (1), umfassend
- eine Rotorwelle (3),
- ein auf der Rotorwelle (3) montiertes Rotorblechpaket (4),
- eine an dem Rotorblechpaket (4) angeordnete Rotorwicklung mit einem stirnseitigen ersten Rotorwicklungskopf (7) und
- eine Rotorkopfabdeckung (20a, 20b), welche einen ersten topfförmigen Abschnitt (B) aufweist, in welchem der erste Rotorwicklungskopf (7) angeordnet ist,
**dadurch gekennzeichnet, dass**
die Rotorkopfabdeckung (20a, 20b) einen zweiten topförmigen Abschnitt (C) aufweist, wobei
- der zweite topfförmige Abschnitt (C) gegengleich zum ersten topfförmigen Abschnitt (B) orientiert ist,
- der erste topfförmige Abschnitt (B) und der zweite topförmige Abschnitt (C) einen gemeinsamen Bodenabschnitt ausbilden und
- der Rotor (2) eine sekundäre Übertragungsspule (21) aufweist, welche in dem zweiten topfförmigen Abschnitt (C) angeordnet ist.

2. Rotor (2) nach Anspruch 1, **gekennzeichnet durch** einen in dem zweiten topfförmigen Abschnitt (C) angeordneten Gleichrichter (24), welcher eingangsseitig mit der sekundären Übertragungsspule (21) und ausgangsseitig mit der Rotorwicklung elektrisch verbunden ist.

3. Rotor (2) nach Anspruch 1 oder 2, **dadurch gekennzeichnet, dass** der erste Rotorwicklungskopf (7) in dem ersten topfförmigen Abschnitt (B) mit einer Vergussmasse (26) vergossen ist.

4. Rotor (2) nach einem der Ansprüche 1 bis 3, **dadurch gekennzeichnet, dass** die sekundäre Übertragungsspule (21) in dem zweiten topfförmigen Abschnitt (C) mit einer Vergussmasse (27) vergossen ist.

5. Rotor (2) nach einem der Ansprüche 1 bis 4, **dadurch gekennzeichnet, dass** die Rotorkopfabdeckung (20a, 20b) einen Kühlkanal (D) aufweist.

6. Rotor (2) nach Anspruch 5, **dadurch gekennzeichnet, dass** der Kühlkanal (D) von einem in der Rotorwelle (3) verlaufenden Rotorwellenkühlkanal (E) ausgeht.

7. Rotor (2) nach Anspruch 5 oder 6, **dadurch gekennzeichnet, dass** der Kühlkanal (D) durch den Bodenabschnitt radial nach außen verläuft.

8. Rotor (2) nach einem der vorangehenden Ansprüche, **dadurch gekennzeichnet, dass** die Rotorkopfabdeckung (20a, 20b) Aluminium aufweist.

9. Rotor (2) nach Anspruch 8, **dadurch gekennzeichnet, dass** die Rotorkopfabdeckung (20b) einen aus Aluminium gefertigten Grundkörper (34) mit einem außen umlaufenden Ring (35) aus Edelstahl aufweist.

10. Elektrische Maschine (1), mit einem Rotor (2) nach einem der vorangehenden Ansprüche und einem den Rotor (2) umgebenden Stator (9).

11. Elektrische Maschine (1) nach Anspruch 10, **gekennzeichnet durch** eine fest mit dem Stator (9) verbundene primäre Übertragungsspule (30), welche benachbart zu der sekundären Übertragungsspule (21) angeordnet ist.

12. Fahrzeug (36) mit einer elektrischen Maschine (1) nach Anspruch 10 oder 11, die zum Antreiben des Fahrzeugs (36) vorgesehen ist.
